# FASCICULE DE BREVET EUROPEEN

(11) **EP 3 351 010 B1**
(45) Date de publication et mention de la délivrance du brevet: **05.06.2019**
(21) Numéro de dépôt: 16825472.0
(22) Date de dépôt: 09.12.2016
(51) Int. Cl.: H04Q 1/06, H05K 7/14, H02B 1/20

(54) **DISPOSITIF DE GUIDAGE DE CÂBLES ORIENTABLE**
VORRICHTUNG ZUR FÜHRUNG VON AUSRICHTBAREN KABELN
DEVICE FOR GUIDING ORIENTABLE CABLES

(30) Priorité: 17.12.2015 FR 1562688
(43) Date de publication de la demande: 25.07.2018
(73) Titulaire: Legrand France, 87000 Limoges (FR); Legrand SNC, 87000 Limoges (FR)
(72) Inventeur: PALUMBO, Alain, 26300 Chatuzange Le Goubet (FR)
(74) Mandataire: Novagraaf Technologies
(86) Numéro de dépôt international: PCT/FR2016/053310
(87) Numéro de publication internationale: WO 2017/103394

(56) Documents cités:
- EP-A1- 0 637 178
- US-A- 5 168 904
- US-A1- 2009 078 835

## Description

### Domaine technique

La présente invention concerne le domaine des systèmes d'installation industriels ou domestiques. Particulièrement, elle concerne des systèmes d'installation des réseaux de télécommunication. Plus particulièrement encore, elle concerne un dispositif de guidage de câbles faisant partie de ces systèmes.

### Etat de la technique

Dans le domaine des télécommunications, des baies de brassage sont couramment utilisées pour regrouper des périphériques d'un réseau informatique. La baie de brassage est constituée d'une armoire de plusieurs niveaux. A chaque niveau de l'armoire se trouve un panneau de brassage qui est connecté à au moins un autre équipement moyennant des cordons, par exemple des câbles Ethernet, des fibres optiques. Afin de faciliter l'installation de ces cordons, un dispositif de guidage de câbles, souvent en forme d'un rectangle creux ouvert, est installé à chaque niveau de la baie de brassage. Un tel dispositif est divulgué dans le document US 6 504 100.

Ainsi, les câbles d'un même niveau forment ensemble un faisceau passant au travers du dispositif de guidage. Le faisceau de câbles est ensuite coudé et dirigé vers le ou les équipements à connecter.

Selon des normes d'installation des câbles dans un réseau de télécommunication, par exemple selon la norme européenne EN50174-2:2009, le câble coudé ou le faisceau de câbles coudé doit respecter un rayon de courbure spécifiée par le fabricant du câble. Le but est d'éviter l'altération de la transmission des signaux effectuée par les câbles, surtout quand la vitesse de transmission est élevée.

Cependant, le dispositif de guidage peut parfois endommager les câbles. En effet, lorsque le faisceau de câbles passe au travers d'un dispositif de guidage et qu'il doit être courbé pour se diriger vers l'équipement à connecter, l'arête supérieure ou inférieure du dispositif de guidage, en étant parallèle au sol, oblige le faisceau à se plier fortement à l'endroit où il touche l'arête supérieure ou inférieure. Ainsi, le faisceau est parfois plié avec un rayon de courbure trop petit, ce qui engendre une déformation du câble qui altère la transmission des signaux.

Le document EP 0 637 178 décrit un exemple de réalisation du dispositif de guidage de câbles. Cependant, le dispositif décrit reste encore perfectible.

Il existe alors un réel besoin de trouver un dispositif de guidage de câbles palliant ces défauts de l'art antérieur, en particulier d'un dispositif de guidage de câbles permettant de mieux accompagner les câbles en faisceau lorsque ces derniers sont déformés pour aller vers un autre équipement tout en respectant le rayon de courbure requis par la norme.

### Description de l'invention

Ces objectifs sont atteints grâce à un dispositif de guidage de câbles pour un système d'installation industriel ou domestique, ledit dispositif de guidage de câbles comprenant :
- un moyen de guidage comprenant un passage destiné à recevoir un ou plusieurs câbles du système,
- un bras support destiné à être fixé au système, et
- un premier moyen de coopération mâle et un premier moyen de coopération femelle, lesdits premiers moyens étant orientables l'un par rapport à l'autre.

Selon l'invention, le premier moyen de coopération mâle et le premier moyen de coopération femelle sont orientables l'un par rapport à l'autre, selon au moins trois positions différentes, autour d'un premier axe associé au dispositif de guidage. Le dispositif de guidage de câbles comprend en outre un deuxième moyen de coopération mâle et un deuxième moyen de coopération femelle, lesdits deuxièmes moyens étant orientables l'une par rapport à l'autre, selon au moins trois positions différentes, autour d'un deuxième axe associé au dispositif de guidage de câbles.

Cette solution permet de résoudre les problèmes de l'art antérieur. En particulier, les moyens de coopération permettent une rotation du moyen de guidage autour d'un premier axe et d'un deuxième axe associé au dispositif de guidage. De plus, le moyen de guidage a au moins trois possibilités d'orientations autour chacun de ces axes.

Ainsi, le moyen de guidage est orientable dans une direction précise. Plus particulièrement, le moyen de guidage peut être orienté dans la même direction que le faisceau de câbles. De cette manière, le dispositif de guidage peut mieux accompagner le faisceau lorsque celui-ci est coudé suivant une direction particulière. Par conséquent, l'utilisateur peut réaliser son installation en respectant le rayon de courbure défini par la norme ce qui permet de préserver l'intégrité du câble et donc la vitesse de transmission des signaux.

Selon d'autres caractéristiques dont les avantageuses ressortiront de la présente description :
- le dispositif de guidage de câbles comprend une pièce intermédiaire reliant le moyen de guidage au bras support, ladite pièce intermédiaire comprenant les premier et deuxième moyens de coopération femelle ;
- la pièce intermédiaire comprend le premier moyen de coopération femelle sur une première face ;
- la pièce intermédiaire comprend le deuxième moyen de coopération femelle sur au moins une deuxième face ;
- le premier moyen de coopération femelle est un premier groupe de fentes, les fentes étant orientées différemment l'une avec l'autre et le premier moyen de coopération mâle est une lame adaptée pour être engagée dans une desdites fentes ;
- le deuxième moyen de coopération femelle est constitué de deux groupes de rainures situés respectivement à une deuxième face et à une troisième face de la pièce intermédiaire, chaque groupe comprenant les rainures étant orientées différemment l'une avec l'autre et le deuxième moyen de coopération mâle étant constitué de deux nervures chacune adaptée pour coopérer avec une des rainures de chaque groupe ;
- la paroi latérale délimitant le passage est discontinue de manière à créer un espace entre une première partie et une deuxième partie de la paroi latérale ;
- le moyen de guidage comprend un logement dans lequel est inséré un moyen d'affichage ;

L'invention concerne également une armoire de brassage qui est équipée d'au moins un dispositif de guidage de câbles selon l'une quelconque des caractéristiques susmentionnées.

L'invention sera mieux comprise à la lecture des exemples ci-dessous, illustrés par les figures annexées, donnés à titre illustratif.

### Brève description des figures

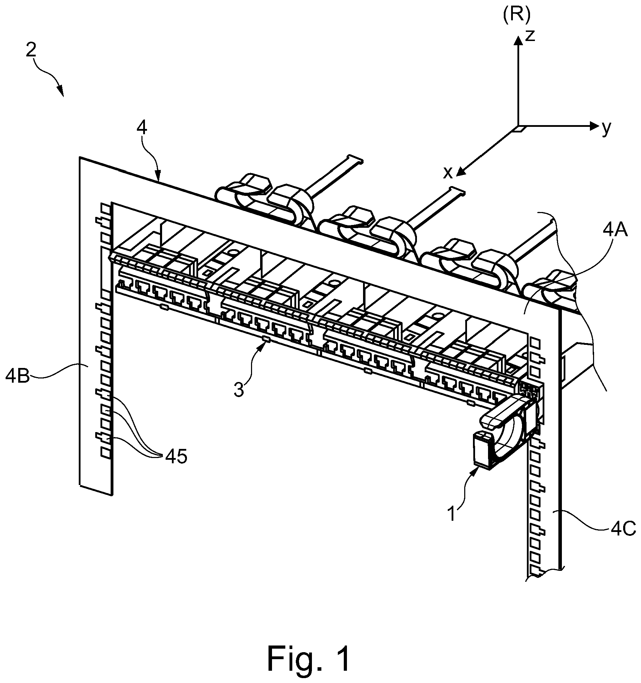

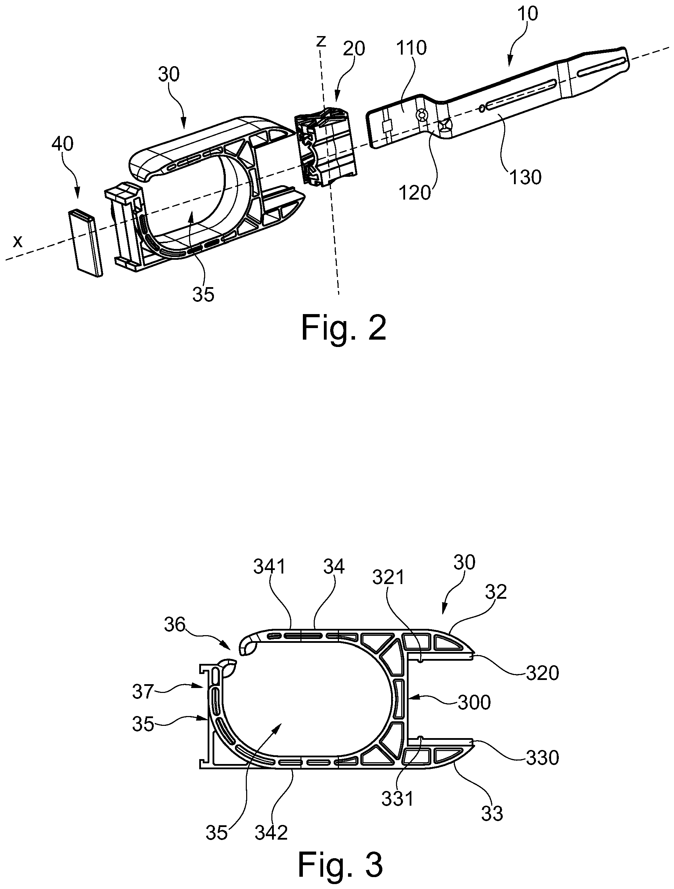

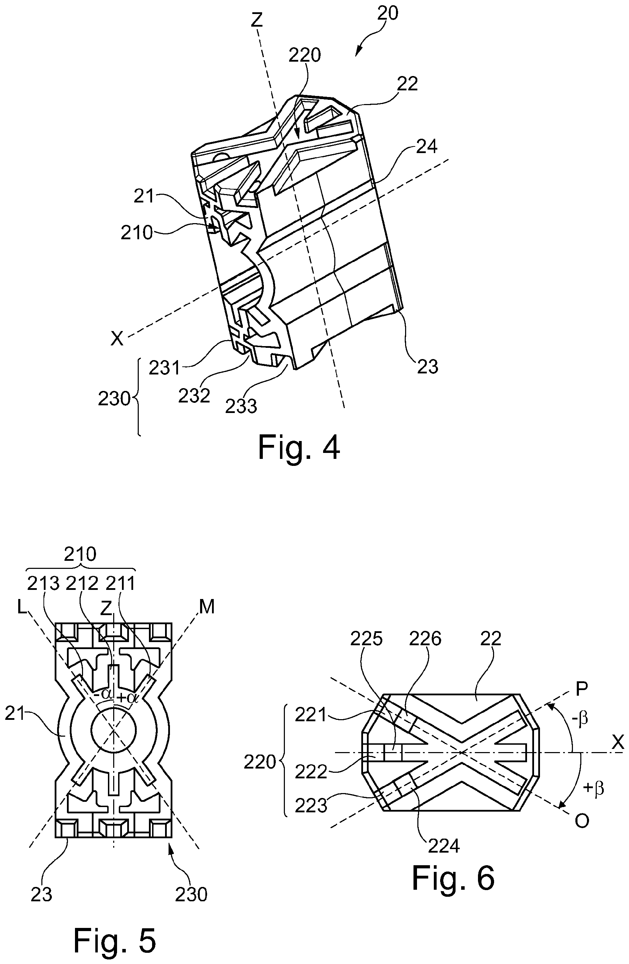

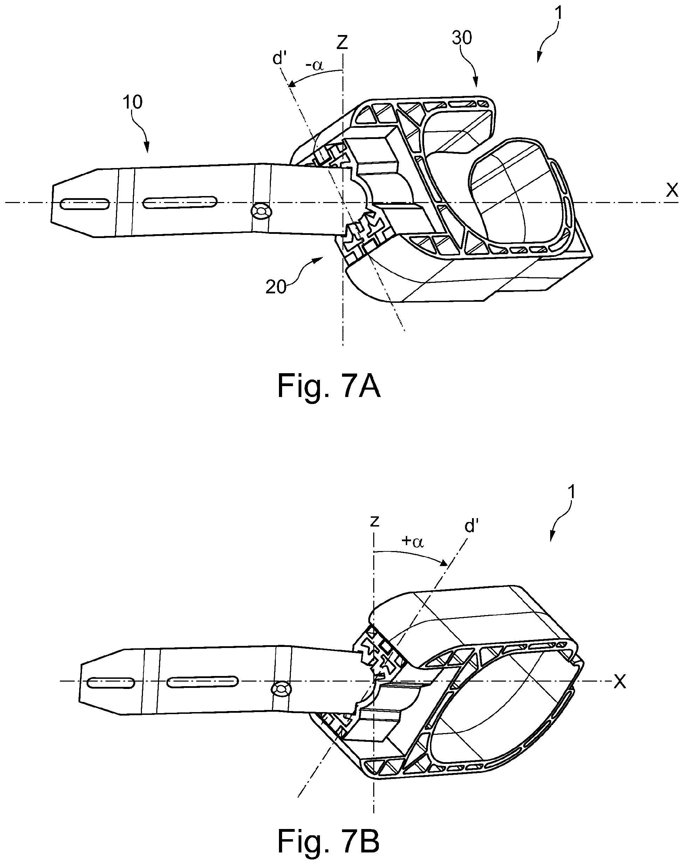

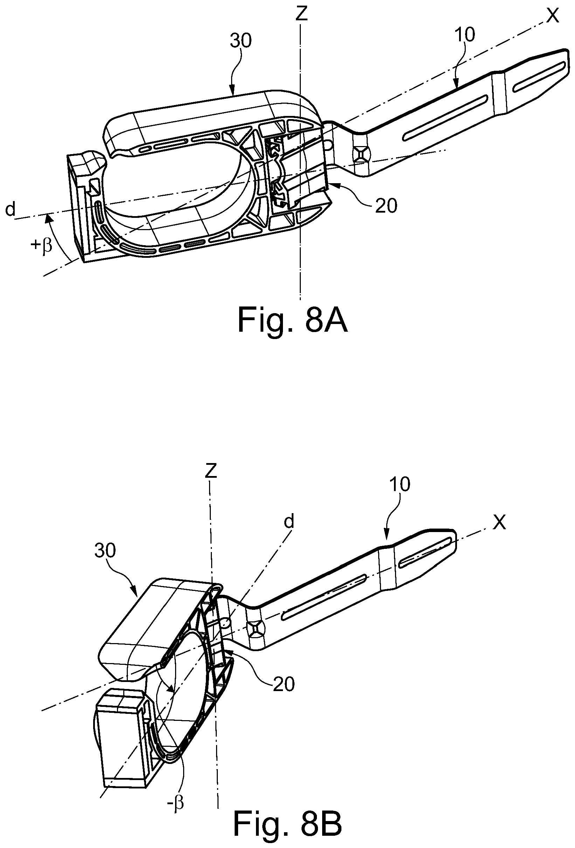

- **La** **figure 1** représente une vue en perspective d'une partie d'une armoire de brassage comprenant un dispositif de guidage de câbles selon l'invention ;
- **La** **figure 2** représente une vue en perspective et en éclaté de différentes pièces constitutives du dispositif de guidage de câbles selon de la figure 1;
- **La** **figure 3** représente une vue de face d'un moyen de guidage faisant partie du dispositif de guidage de câbles selon la figure 1;
- **Les** **figures 4, 5, 6** représentent respectivement une vue en perspective, une vue de côté et une vue de dessus d'une pièce intermédiaire du dispositif de guidage de câbles selon la figure 1;
- **Les** **figures 7A et 7B** représentent différentes rotations autour d'un axe X du moyen de guidage par rapport à un bras support du dispositif de guidage de câbles de la figure 1 ;
- **Les** **figures 8A et 8B** représentent différentes rotations autour d'un axe Z du moyen de guidage par rapport à un bras support du dispositif de guidage de câbles de la figure **1**.

### Description détaillée

En référence à la **figure 1****,** est représentée en vue de perspective une partie d'une armoire de brassage **2** comprenant un panneau de brassage **3** et un cadre de montage **4.** Ce dernier est constitué d'une barre horizontale **4A** reliant à chacune de ses extrémités une barre verticale **4B** et **4C.** La barre horizontale **4A** se trouve au-dessus du panneau de brassage **3.** La première barre verticale **4B** et la deuxième barre verticale **4C** comportent plusieurs ouvertures **45** qui sont destinées à recevoir des crochets d'un support (non représenté) du panneau de brassage **3.**

Un dispositif de guidage de câbles **1** est installé sur le panneau de brassage **3.**

Pour faciliter la compréhension de la description, un repère **(R)** est associé à l'armoire de brassage **2.** Ce repère **(R)** est constitué de trois axes: un axe **Z** s'étend selon la verticale, des axes **X** et **Y** appartiennent à un même plan horizontal et ils sont perpendiculaires entre eux. L'axe Z est parallèle aux barres verticales **4B** et **4C** alors que les axes X et Y appartiennent à un plan horizontal parallèle au panneau de brassage **3.**

Dans le présent document, on entend par « supérieur » ou « le haut » la partie supérieure de la figure 1 selon l'axe Z. Inversement, par « inférieur » ou « le bas », on entend la partie inférieure de la figure 1 selon l'axe Z.

On entend par « gauche » le côté de la première barre verticale **4B.** Inversement, on entend par «droite» le côté de la deuxième barre verticale **4C.**

Par ailleurs, les termes « avant », « arrière » sont définis par rapport à l'axe X. On entend par « avant » la partie avant de la figure et par « arrière » la partie arrière de la figure. Dans l'exemple ci-présent, le dispositif de guidage de câbles **1** est à l'avant du panneau de brassage **3.** Inversement, le panneau de brassage **3** est situé à l'arrière du dispositif de guidage **1.**

En référence à **la** **figure 2****,** est représenté en vue de perspective et en éclaté un dispositif de guidage de câbles **1** selon l'invention.

Le dispositif de guidage de câbles **1,** ci-après appelé « dispositif de guidage », comprend un bras support **10,** une pièce intermédiaire **20,** un moyen de guidage **30** et un moyen d'affichage **40.**

Les axes X, Y et Z du repère **(R)** sont associés désormais au dispositif de guidage **1.** Ainsi, ce dernier comprend une longueur s'étendant suivant l'axe X et une hauteur suivant l'axe Z.

Comme illustré à **la** **figure 2****,** le bras support **10** est une bande plate pliée de sorte à former un épaulement **120** séparant le bras support **10** en deux parties : une branche longue **130** et une branche courte constituant une lame **110.** La branche longue **130** est destinée à être insérée dans un logement correspondant ménagé dans le panneau de brassage **2.** La lame **110** est adaptée pour être insérée dans une des fentes de la pièce intermédiaire **20.**

Sur **la** **figure 3****,** est illustré le moyen de guidage **30.** Sur une première face **300,** deux bras **32** et **33** saillissent vers l'arrière du moyen de guidage **30.** Le bras supérieur **32** comporte une nervure supérieure **320.** De manière symétrique, le bras inférieur **33** comporte une nervure inférieure **330.** Chaque nervure est adaptée pour être engagée dans une des rainures de la pièce intermédiaire **20.** Chaque nervure **320** ou **330** comprend en outre un ergot **321** ou **331** dont la fonction sera enseignée ultérieurement.

Dans ce mode de réalisation, le bras supérieur **32,** le bras inférieur **33** et la première face **300** délimitent un espace qui est apte à recevoir la pièce intermédiaire **20.**

Le moyen de guidage **30** comprend en outre un passage **35** délimité par une paroi latérale **34.** Le passage **35** reçoit un ou plusieurs cordons d'un panneau de brassage. Par ailleurs, la paroi latérale **34** est discontinue. Un espace vide **36,** divisant la paroi latérale en deux parties **341** et **342,** permet d'enlever ou d'ajouter un ou plusieurs cordons dans le passage **35.**

De plus, un logement **37** est ménagé à une deuxième face **350** opposée à la première face **300.** Le logement **37** a pour but de recevoir un moyen d'affichage **40,** par exemple une étiquette ou un rectangle coloré. Le moyen d'affichage **40** indique les informations liées au panneau de brassage tel que son code de série, le nombre de ports de connexion.

La pièce intermédiaire **20** est représentée **à la** **figure 4** et **à la** **figure 5****.** Une face avant **21** de la pièce intermédiaire **20** comporte un groupe **210** constitué de trois fentes **211, 212** et **213.** Le groupe de fentes **210** traverse toute la longueur de la pièce intermédiaire **20** et débouche sur une face arrière **24** opposée à la face avant **21.** Les trois fentes **211, 212** et **213** sont orientées différemment l'une avec l'autre. Précisément, la deuxième fente **212** s'étend selon l'axe Z alors que la première fente **211** s'étend suivant un axe M incliné d'un angle «a » par rapport à l'axe Z dans le sens des aiguilles d'une montre. De manière symétrique, la troisième fente **213** s'étend suivant un axe L incliné d'un angle «-α » par rapport à l'axe Z dans le sens des aiguilles d'une montre.

L'angle « α » a, par exemple, une valeur de 30°. Dans un autre exemple, l'angle « α » formé entre deux fentes consécutives, précisément entre la première fente **211** et la deuxième fente **212** et entre la deuxième fente **212** et la troisième fente **213,** a une valeur de 35°.

Les fentes **211, 212, 213** présentées ci-dessus sont adaptées pour coopérer avec la lame **110** du bras support **10.**

Bien entendu, l'invention ne se limitera pas au nombre de trois fentes orientées différemment. La pièce intermédiaire **20,** dans un autre mode de réalisation, peut comprendre plus que trois fentes orientées différemment.

Comme illustré à la **figure 4** et à la **figure 6****,** la pièce intermédiaire **20** comprend en outre à sa face supérieure **22** un premier groupe de rainures **220** étant constitué de trois rainures **221, 222** et **223.** Ces rainures sont orientées différemment l'une avec l'autre. Précisément, la deuxième rainure **222** s'étend selon l'axe X alors que la première rainure **221** s'étend suivant un axe O incliné d'un angle « β» par rapport à l'axe X dans le sens des aiguilles d'une montre. Parallèlement, la troisième rainure **223** s'étend suivant un axe P incliné d'un angle « -β » par rapport à l'axe X dans le sens des aiguilles d'une montre.

L'angle « β» a, par exemple, une valeur de 30°.

De façon identique, un deuxième groupe **230** de rainures comprenant trois rainures **231, 232** et **233** est pratiqué à une face inférieure **23** opposée à la face supérieure **22.**

Les rainures de la face supérieure **22** et de la face inférieures **23** sont adaptées pour coopérer respectivement avec la nervure supérieure **320** et la nervure inférieure **330** du moyen de guidage **30.**

Dans un autre mode de réalisation, la pièce intermédiaire **20** peut comprendre plus que trois rainures distinctes dans chaque groupe de rainures.

**Les** **figures 7A** et **7B** représentent différentes rotations du moyen de guidage **30** par rapport au bras support **10** autour de l'axe X.

Le moyen de guidage **30** comprend un axe longitudinal d et un axe transversal d'.

Pour faciliter la compréhension, la rotation du moyen de guidage **30** autour de l'axe X est définie par la position de l'axe transversal d' par rapport à l'axe Z. Parallèlement, la rotation du moyen de guidage **30** autour de l'axe Z est définie par la position de l'axe longitudinal d par rapport à l'axe X.

Dans la configuration pour laquelle le moyen de guidage **30** reste aligné avec le bras de support **10,** l'axe d est parallèle ou confondu avec l'axe X tandis que l'axe d'est parallèle ou confondu avec l'axe Z. D'un point de vue structurel, la lame **110** est engagée dans la deuxième fente **212** en même temps les nervures **320** et **330** coopèrent respectivement avec les deuxièmes rainures **222** et **232.**

A **la** **figure 7A****,** la lame **110** du bras support **10** est insérée dans la troisième fente **213.** L'axe transversal d' forme ainsi un angle de signe négatif avec l'axe Z dans le sens des aiguilles d'une montre. L'angle formé correspond à l'angle « -a » défini entre la troisième fente **213** et la deuxième fente **212.**

A **la** **figure 7B****,** la lame **110** est insérée dans la première fente **211.** Cette fois-ci, l'axe transversal d'forme un angle de signe positif avec l'axe Z dans le sens des aiguilles d'une montre. L'angle formé correspond à l'angle « α » défini entre la première fente **211** et la deuxième fente **212.**

A titre d'exemple, l'angle « α » ou « -a » a pour valeur absolue 30°.

**Les** **figures 8A** et **8B** représentent différentes rotations du moyen de guidage **30** par rapport au bras support **10** autour de l'axe vertical Z.

A **la** **figure 8A****,** le moyen de guidage **30** est orienté vers la gauche par rapport au bras support **10.** En d'autres termes, le moyen de guidage **30** est tourné vers la première barre verticale **4B** illustrée à **la** **figure 1****.** Pour obtenir une telle position, les nervures **320** et **330** sont engagées respectivement dans les premières rainures **221** et **231.** Le moyen de guidage **30** prend en étau la pièce intermédiaire **20** entre ses bras supérieur **32** et inférieur **33.**

Ainsi, l'axe longitudinal d du moyen de guidage **30** forme avec l'axe X un angle de signe positif dans le sens des aiguilles d'une montre. Cet angle correspond à l'angle « β » défini entre la première rainure **221** ou **231** avec la deuxième rainures **222** ou **232.**

A la **figure 8B****,** le moyen de guidage **30** est orienté vers la droite par rapport au bras support **10.** Les nervures **320** et **330** cette fois-ci sont engagées respectivement dans les troisièmes rainures **223** et **233.** L'angle formé entre l'axe longitudinal d et l'axe X dans le sens des aiguilles d'une montre porte un signe négatif. Il correspond à l'angle «-β » défini entre la troisième rainure **223** ou **233** et la deuxième rainure **222** ou **232.**

De la même façon que la **figure 8A****,** la pièce intermédiaire **20** est prise en étau entre les bras supérieur **32** et inférieur **33** du moyen de guidage **30.**

A titre d'exemple, l'angle « β » et «-β » a pour valeur absolue 30°.

Avantageusement, afin d'éviter le glissement des nervures **320** et **330,** donc la désolidarisation de celles-ci des rainures, chaque rainure **221, 222, 223** comprend un trou **224, 225, 226** coopérant avec les ergots **321** et **331.** Ainsi, lorsque l'ergot **321** ou **331** est emboîté dans un de ces trous, l'emboîtement est signalé par un bruit de cliquetage. Les nervures **320** et **330** sont ainsi maintenues solidaires avec les rainures correspondantes.

Dans un autre mode de réalisation non représenté, l'orientation vers la gauche ou vers la droite du moyen de guidage **30** est réalisée au moyen d'une charnière. Concrètement, la charnière est constituée d'un premier cylindre, solidaire du moyen de guidage **30,** disposé à la verticale et qui est emboîté dans un deuxième cylindre du bras support **10.** Les deux cylindres sont coaxiaux et ils sont libres en rotation l'un par rapport à l'autre autour de l'axe vertical Z. Ainsi, cette rotation libre fait tourner d'une manière continue le moyen de guidage **30** à droite ou à gauche par rapport au bras support **10.**

Dans les exemples présentés **aux** **figures 7A, 7B****,** **8A et 8B****,** le moyen de guidage **30** est soit tourné autour de l'axe X soit tourné autour de l'axe Z. Précisément, le moyen de guidage **30,** étant engagé dans une des rainures **220, 230,** est orienté par rapport à la pièce intermédiaire autour de l'axe Z. Parallèlement, le bras support **10,** étant inséré dans une des fentes **210,** est orienté par rapport à la pièce intermédiaire **20** autour de l'axe X. Dans ce cas, si le moyen de guidage **30** est accroché à la pièce intermédiaire **20,** cela signifie que le moyen de guidage **30** est orienté par rapport au bras support **10** autour de l'axe X.

Bien évidemment, le moyen de guidage **30** peut être tourné à la fois autour de l'axe X et autour de l'axe Z. Pour cela, plusieurs configurations sont possibles :
- La lame **110** est insérée dans la première fente **211** et les nervures **320** et **330** sont insérées dans les premières rainures **221** et **231** ; ou
- La lame **110** est insérée dans la troisième fente **213** et les nervures **320** et **330** sont insérées dans les premières rainures **221** et **231** ; ou
- La lame **110** est insérée dans la première fente **211** et les rainures **320** et **330** sont insérées dans les troisièmes rainures **223** et **233** ; ou
- La lame **110** est insérée dans la troisième fente **213** et les rainures **320** et **330** sont insérées dans les troisièmes rainures **223** et **233.**

Plusieurs configurations, donc plusieurs orientations, du moyen de guidage **30** sont envisageables. On aura d'autant plus de positions que les fentes et/ou les rainures sont nombreuses.

Bien entendu, il est possible d'apporter à l'invention de nombreuses modifications sans pour autant sortir du cadre de celle-ci.

Par exemple, le nombre de fentes **210** et de rainures **220, 230** peuvent être supérieurs à trois. Le nombre de fentes et de rainures correspondent au nombre de positions d'orientation autour de chacun des axes.

Dans un exemple de réalisation de l'invention, le nombre de fentes **210** peut être différent de celui des rainures **220, 230.**

Par ailleurs, la valeur de l'angle « α » défini entre les fentes **210** peut être différente de celle de l'angle « β » défini entre les rainures **220, 230.** A titre d'exemple, l'angle « α » a une valeur de 35° tandis que l'angle « β » a une valeur de 30°.

## Revendications

1. Dispositif de guidage de câbles (1) pour des systèmes d'installation industriels ou domestiques comprenant
- un moyen de guidage (30) comprenant un passage (35) destinée à recevoir un ou plusieurs câbles du système,
- un bras support (10) destiné à être fixé au système,
- un premier moyen de coopération mâle (110) et un premier moyen de coopération femelle (210), lesdits premiers moyens étant orientables l'un par rapport à l'autre,
le dispositif de guidage de câbles (1) étant **caractérisé en ce que**
- le premier moyen de coopération mâle (110) et le premier moyen de coopération femelle (210) étant orientables l'un par rapport à l'autre selon au moins trois positions différentes, autour d'un premier axe (X) associé au dispositif de guidage de câbles ;
- le dispositif de guidage de câbles (1) comporte un deuxième moyen de coopération mâle (320, 330) et un deuxième moyen de coopération femelle (220, 230), lesdits deuxièmes moyens étant orientables l'un par rapport à l'autre, selon au moins trois positions différentes, autour d'un deuxième axe (Z) associé au dispositif de guidage de câbles (1).

2. Dispositif de guidage de câbles (1) selon la revendication 1 **caractérisé en ce qu'**il comprend une pièce intermédiaire (20) reliant le moyen de guidage (30) au bras support (10) et **en ce que** ladite pièce intermédiaire (20) comprend les premier et deuxième moyens de coopération femelle (210, 220, 230).

3. Dispositif de guidage de câbles (1) selon la revendication 1 ou la revendication 2 **caractérisé en ce que** la pièce intermédiaire (20) comprend le premier moyen de coopération femelle (210) sur une première face (21).

4. Dispositif de guidage de câbles (1) selon la revendication 3 **caractérisé en ce que** la pièce intermédiaire (20) comprend le deuxième moyen de coopération femelle (220, 230) sur au moins une deuxième face (22, 23).

5. Dispositif de guidage de câbles (1) selon les revendications précédentes **caractérisé en ce que** le premier moyen de coopération femelle (210) est un premier groupe de fentes (211, 212, 213), les fentes étant orientées différemment l'une avec l'autre et **en ce que** le premier moyen de coopération mâle (110) est une lame adaptée pour être engagée dans une desdites fentes (211, 212, 213).

6. Dispositif de guidage de câbles (1) selon les revendications précédentes **caractérisé en ce que** le deuxième moyen de coopération femelle (220, 230) est constitué de deux groupes de rainures (221, 222, 223 ; 231, 232, 233) situés respectivement à une deuxième face (22) et à une troisième face (23) opposée à la deuxième face (22) de la pièce intermédiaire (20), chaque groupe comprenant les rainures (221, 222, 223 ; 231, 232, 233) étant orientées différemment l'une avec l'autre et **en ce que** le deuxième moyen de coopération mâle (320, 330) est constitué de deux nervures chacune adaptée pour coopérer avec une des rainures de chaque groupe.

7. Dispositif de guidage de câbles (1) selon les revendications précédentes **caractérisé en ce que** la paroi latérale (34) délimitant le passage (35) est discontinue de manière à créer un espace (36) entre une première partie (341) et une deuxième partie (342) de la paroi latérale (34).

8. Dispositif de guidage de câbles (1) selon les revendications précédentes **caractérisé en ce que** le moyen de guidage (30) comprend un logement (37) dans lequel est inséré un moyen d'affichage (40).

9. Armoire de brassage (2) **caractérisée en ce qu'**elle comporte au moins un dispositif de guidage de câbles (1) selon l'une quelconque des revendications précédentes.

## Patentansprüche

1. Kabelführungsvorrichtung (1) für Industrieanlagen- oder Heimsysteme, umfassend
- ein Führungsmittel (30), das eine Passage (35) umfasst, die dazu bestimmt ist, ein oder mehrere Kabel des Systems aufzunehmen,
- einen Tragarm (10), der dazu bestimmt ist, an dem System befestigt zu werden,
- ein erstes Steckzusammenarbeitsmittel (110) und ein erstes Buchsenzusammenarbeitsmittel (210), wobei die ersten Mittel zueinander ausrichtbar sind,
wobei die Kabelführungsvorrichtung (1) **dadurch gekennzeichnet, dass**
- das erste Steckzusammenarbeitsmittel (110) und das erste Buchsenzusammenarbeitsmittel (210) zueinander gemäß mindestens drei unterschiedlichen Positionen um eine erste Achse (X), die mit der Kabelführungsvorrichtung assoziiert ist, ausrichtbar sind;
- die Kabelführungsvorrichtung (1) ein zweites Steckzusammenarbeitsmittel (320, 330) und ein zweites Buchsenzusammenarbeitsmittel (220, 230) umfasst, wobei die zweiten Mittel gemäß mindestens drei unterschiedlichen Positionen zueinander um eine zweite Achse (Z), die mit der Kabelführungsvorrichtung (1) assoziiert sind, ausrichtbar sind.

2. Kabelführungsvorrichtung (1) nach Anspruch 1, **dadurch gekennzeichnet, dass** sie ein Zwischenteil (20) umfasst, das das Führungsmittel (30) mit dem Tragarm (10) verbindet, und dadurch, dass das Zwischenteil (20) das erste und das zweite Buchsenzusammenarbeitsmittel (210, 220, 230) umfasst.

3. Kabelführungsvorrichtung (1) nach Anspruch 1 oder Anspruch 2, **dadurch gekennzeichnet, dass** das Zwischenteil (20) das erste Buchsenzusammenarbeitsmittel (210) auf einer ersten Fläche (21) umfasst.

4. Kabelführungsvorrichtung (1) nach Anspruch 3, **dadurch gekennzeichnet, dass** das Zwischenteil (20) das zweite Buchsenzusammenarbeitsmittel (220, 230) auf mindestens einer zweiten Fläche (22, 23) umfasst.

5. Kabelführungsvorrichtung (1) nach den vorstehenden Ansprüchen, **dadurch gekennzeichnet, dass** das erste Buchsenzusammenarbeitsmittel (210) eine erste Gruppe von Schlitzen (211, 212, 213) ist, wobei die Schlitze unterschiedlich zueinander ausgerichtet sind, und dadurch, dass das erste Steckzusammenarbeitsmittel (110) eine Klinge ist, die angepasst ist, um in einen der Schlitze (211, 212, 213) eingeführt zu werden.

6. Kabelführungsvorrichtung (1) nach den vorstehenden Ansprüchen, **dadurch gekennzeichnet, dass** das zweite Buchsenzusammenarbeitsmittel (220, 230) aus zwei Gruppen von Nuten (221, 222, 223; 231, 232, 233) besteht, die jeweils an einer zweiten Fläche (22) und an einer dritten Fläche (23), die der zweiten Fläche (22) des Zwischenteils (20) entgegengesetzt ist, liegen, wobei jede Gruppe Nuten (221, 222, 223; 231, 232, 233) umfasst, die unterschiedlich zueinander ausgerichtet sind, und dadurch, dass das zweite Steckzusammenarbeitsmittel (320, 330) aus zwei Nuten besteht, die jeweils angepasst sind, um mit einer der Nuten jeder Gruppe zusammenzuarbeiten.

7. Kabelführungsvorrichtung (1) nach den vorstehenden Ansprüchen, **dadurch gekennzeichnet, dass** die Seitenwand (34), die die Passage (35) abgrenzt, derart diskontinuierlich ist, dass ein Raum (36) zwischen einem ersten Teil (341) und einem zweiten Teil (342) der Seitenwand (34) geschaffen wird.

8. Kabelführungsvorrichtung (1) nach den vorstehenden Ansprüchen, **dadurch gekennzeichnet, dass** das Führungsmittel (30) eine Aufnahme (37) umfasst, in die ein Anzeigemittel (40) eingesetzt ist.

9. Netzwerkschrank (2), **dadurch gekennzeichnet, dass** er mindestens eine Kabelführungsvorrichtung (1) nach einem der vorstehenden Ansprüche umfasst.

## Claims

1. Device for guiding cables (1) for industrial or domestic installation systems including:
- a guidance means (30) including a passage (35) intended to receive one or several cables of the system,
- a support arm (10) intended to be attached to the system,
- a first male engagement means (110) and a first female engagement means (210), said first means able to be mutually oriented,
the device for guiding cables (1) being **characterised in that**
- the first male engagement means (110) and the first female engagement means (210) are able to be mutually oriented in at least three different positions, about a first axis (X) associated with the device for guiding cables;
- the device for guiding cables (1) includes a second male engagement means (320, 330) and a second female engagement means (220, 230), said second means able to be mutually oriented, in at least three different positions, about a second axis (Z) associated with the device for guiding cables (1).

2. Device for guiding cables (1) according to claim 1 **characterised in that** it includes an intermediate part (20) connecting the guidance means (30) to the support arm (10) and **in that** said intermediate part (20) includes the first and second female engagement means (210, 220, 230) .

3. Device for guiding cables (1) according to claim 1 or claim 2 **characterised in that** the intermediate part (20) includes the first female engagement means (210) on a first face (21).

4. Device for guiding cables (1) according to claim 3 **characterised in that** the intermediate part (20) includes the second female engagement means (220, 230) on at least one second face (22, 23).

5. Device for guiding cables (1) according to the preceding claims **characterised in that** the first female engagement means (210) is a first group of slots (211, 212, 213), with the slots being oriented differently from one another and **in that** the first male engagement means (110) is a blade suitable for being engaged into one of said slots (211, 212, 213).

6. Device for guiding cables (1) according to the preceding claims **characterised in that** the second female engagement means (220, 230) is comprised of two groups of grooves (221, 222, 223; 231, 232, 233) located respectively at a second face (22) and at a third face (23) opposite the second face (22) of the intermediate part (20), with each group including the grooves (221, 222, 223; 231, 232, 233) being oriented differently from one another and **in that** the second male engagement means (320, 330) is comprised of two ribs each suited for engaging with one of the grooves of each group.

7. Device for guiding cables (1) according to the preceding claims **characterised in that** the lateral wall (34) delimiting the passage (35) is discontinuous in such a way as to create a space (36) between a first portion (341) and a second portion (342) of the lateral wall (34).

8. Device for guiding cables (1) according to the preceding claims **characterised in that** the guidance means (30) includes a housing (37) wherein is inserted a means of display (40).

9. Switching cabinet (2) **characterised in that** it includes at least one device for guiding cables (1) as claimed in any preceding claim.
